# EUROPÄISCHE PATENTSCHRIFT

(11) **EP 2 532 086 B1**
(45) Veröffentlichungstag und Bekanntmachung des Hinweises auf die Patenterteilung: **26.02.2014**
(21) Anmeldenummer: 10798993.1
(22) Anmeldetag: 08.12.2010
(51) Int. Cl.: H02P 6/00, H02P 29/02, B62D 5/04

(54) **SCHALTUNGSANORDNUNG UND VERFAHREN UND VORRICHTUNG ZUM BETREIBEN DER SCHALTUNGSANORDNUNG**
CIRCUIT ARRANGEMENT AND METHOD AND DEVICE FOR OPERATING THE CIRCUIT ARRANGEMENT
CIRCUIT ET PROCÉDÉ POUR FAIRE FONCTIONNER LE CIRCUIT

(30) Priorität: 04.02.2010 DE 102010001593
(43) Veröffentlichungstag der Anmeldung: 12.12.2012
(73) Patentinhaber: Continental Automotive GmbH, 30165 Hannover (DE)
(72) Erfinder: GYÖRI, Csaba, 65428 Rüsselsheim (DE)
(86) Internationale Anmeldenummer: PCT/EP2010/069126
(87) Internationale Veröffentlichungsnummer: WO 2011/095246

(56) Entgegenhaltungen:
- DE-A1-102005 044 875
- DE-A1-102006 018 053
- US-A- 4 434 389
- US-A- 4 896 088
- US-A1- 2005 049 770

## Beschreibung

Die Erfindung betrifft eine Schaltungsanordnung für eine elektrische Maschine und ein Verfahren und eine Vorrichtung zum Betreiben der Schaltungsanordnung.

Elektrische Maschinen, so z.B. Elektromotoren, finden beispielsweise Einsatz im Bereich der Automobiltechnik, wo sie beispielsweise innerhalb eines Lenksystems zur Unterstützung einer vorgegebenen Lenkbewegung eingesetzt werden. Derartige elektrische Maschinen können beispielsweise als permanenterregte bürstenlose Synchronmaschinen ausgebildet sein.

Die Aufgabe, die der Erfindung zugrunde liegt, ist es, eine Schaltungsanordnung und ein Verfahren und eine korrespondierende Vorrichtung zu schaffen, die bzw. das einen zuverlässigen Betrieb einer elektrischen Maschine ermöglicht.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich gemäß einem ersten Aspekt aus durch eine Schaltungsanordnung für eine elektrische Maschine, die mehrere Statorwicklungen umfasst. Jede Statorwicklung umfasst zumindest einen ersten Wicklungsstrang und einen zweiten Wicklungsstrang. Die Schaltungsanordnung umfasst zumindest eine vorgegebene erste und eine vorgegebene zweite Auswahl von jeweils mehreren Halbbrücken. Jede Halbbrücke weist ein erstes Schaltelement und ein dazu elektrisch in Reihe gekoppeltes zweites Schaltelement auf. Ein gemeinsamer Anschluss der beiden Schaltelemente der jeweiligen Halbbrücke der ersten Auswahl ist jeweils mit einem Anschluss des ersten Wicklungsstranges der jeweiligen zugeordneten Statorwicklung elektrisch koppelbar. Den Halbbrücken der ersten Auswahl sind jeweils unterschiedliche Statorwicklungen zugeordnet. Ein gemeinsamer Anschluss der beiden Schaltelemente der jeweiligen Halbbrücke der zweiten Auswahl ist jeweils mit einem Anschluss des zweiten Wicklungsstranges der jeweiligen zugeordneten Statorwicklung elektrisch koppelbar. Den Halbbrücken der zweiten Auswahl sind jeweils unterschiedliche Statorwicklungen zugeordnet. Eine derartige Schaltungsanordnung ermöglicht einen zuverlässigen Betrieb und eine höhere Verfügbarkeit der elektrischen Maschine. Insbesondere sind zusätzliche Komponenten in der elektrischen Maschine, so z.B. Sternpunktrelais, die für einen Fehlerfall vorgesehen sind, typischerweise nicht mehr erforderlich. Dies ermöglicht eine einfache und kostengünstige elektrische Maschine.

Die elektrische Maschine ist beispielsweise als permanenterregte Synchronmaschine ausgebildet. Vorzugsweise sind die den Halbbrücken abgewandten Anschlüsse der Strangwicklungen in einem gemeinsamen elektrischen Sternpunkt miteinander elektrisch gekoppelt. Ferner ist typischerweise jedem Schaltelement der Halbbrücken eine elektrisch parallel angeordnete Freilaufdiode zugeordnet. Vorzugsweise korreliert die Anzahl der Halbbrücken je Auswahl mit der Anzahl der Statorwicklungen. Jeder Halbbrücke der jeweiligen Auswahl ist vorzugsweise.eine andere Statorwicklung zugeordnet.
Die Erfindung zeichnet sich gemäß einem zweiten und dritten Aspekt aus durch ein Verfahren und eine korrespondierende Vorrichtung zum Betreiben einer Schaltungsanordnung gemäß dem ersten Aspekt, bei dem zumindest eine vorgegebene Kenngröße der Schaltungsanordnung erfasst wird und abhängig von der zumindest einen erfassten Kenngröße ein Fehler eines Schaltelementes entweder der ersten oder zweiten Auswahl detektiert wird. Aus dem Fehler resultiert zumindest während eines Drehens eines Rotors der elektrischen Maschine ein Bremsdrehmoment auf den Rotor. Abhängig von der Detektierung des Fehlers wird zumindest ein fehlerfreies Schaltelement der jeweils fehlerfreien Auswahl derart angesteuert, dass ein vorgegebener Kompensationsstrom dem jeweils zugeordneten Wicklungsstrang derart zugeführt wird, dass daraus ein zugeordnetes Gegendrehmoment resultiert, das dem Bremsdrehmoment entgegenwirkt. Dies kann bei einem Vorliegen des Fehlers eine Blockierung einer Drehung des Rotors der elektrischen Maschine verhindern. Insbesondere kann der Fehler dazu führen, dass die elektrische Maschine generatorisch betrieben wird, wodurch typischerweise ein Strom bereitgestellt wird, aus dem das Bremsdrehmoment resultiert. Die Kenngröße kann beispielsweise durch eine Betriebsgröße der Schaltungsanordnung repräsentiert werden. Eine Ansteuerung des jeweiligen Schaltelementes repräsentiert vorzugsweise ein Einschalten dieses Schaltelementes.

In einer vorteilhaften Ausgestaltung des zweiten und dritten Aspekts wird zumindest eine Betriebsgröße der elektrischen Maschine ermittelt. Abhängig von der zumindest einen ermittelten Betriebsgröße wird das zumindest eine fehlerfreie Schaltelement angesteuert. Dies ermöglicht eine Anpassung des Kompensationsstromes an einen aktuellen Betriebszustand der elektrischen Maschine. Abhängig von der zumindest einen ermittelten Betriebsgröße kann beispielsweise eine Anzahl der anzusteuernden fehlerfreien Schaltelemente und/oder eine Einschaltdauer des zumindest einen fehlerfreien Schaltelementes vorgegeben werden.

In einer vorteilhaften Ausgestaltung des zweiten und dritten Aspekts werden als zumindest eine Betriebsgröße der elektrischen Maschine eine aktuelle Drehzahl und/oder eine aktuelle Winkelposition des Rotors und/oder eine Drehrichtung des Rotors ermittelt. Die Ermittlung dieser Betriebsgrößen erlaubt besonders vorteilhaft eine Ermittlung der Ansteuerung des zumindest einen fehlerfreien Schaltelementes.

In einer vorteilhaften Ausgestaltung des zweiten und dritten Aspekts werden abhängig von der Detektierung des Fehlers alle übrigen Schaltelemente der Auswahl, die das fehlerhafte Schaltelement aufweist, in einen hochohmigen Schaltzustand gesteuert. Dies kann einen weiteren Einfluss dieser Auswahl an der Entstehung des Bremsdrehmoments reduzieren.

In einer vorteilhaften Ausgestaltung des zweiten und dritten Aspekts wird als Fehler des Schaltelementes ein dauerhafter niederohmiger Schaltzustand detektiert. Dieser Fehler trägt vorzugsweise zur Entstehung des Bremsdrehmoments bei. Eine Detektierung dieses Fehlers und eine davon abhängige Bereitstellung des Gegendrehmoments kann eine Blockierung des Rotors verhindern.

In einer vorteilhaften Ausgestaltung des zweiten und dritten Aspekts werden als vorgegebene Kenngrößen der Schaltungsanordnung Halbbrückenspannungen erfasst. Eine Halbbrückenspannung ist jeweils einer Halbbrücke zugeordnet und repräsentiert eine Spannung, die dem gemeinsamen Anschluss der beiden Schaltelemente der jeweiligen Halbbrücke zugeordnet ist. Dies ermöglicht eine besonders zuverlässige Ermittlung des Fehlers, insbesondere des dauerhaften niederohmigen Schaltzustands des fehlerbehafteten Schaltelements.

In einer vorteilhaften Ausgestaltung des zweiten und dritten Aspekts wird der Kompensationsstrom derart vorgegeben, dass das Gegendrehmoment gleich dem Bremsdrehmoment ist. Dies ermöglicht, dass der Rotor weiterhin drehbar ist.

Ausführungsbeispiele der Erfindung sind im Folgenden anhand der schematischen Zeichnungen näher erläutert. Es zeigen:
- Fig. 1: eine Schaltungsanordnung,
- Fig. 2: ein Ablaufdiagramm.

Elemente gleicher Konstruktion oder Funktion sind figurenübergreifend mit den gleichen Bezugszeichen versehen.

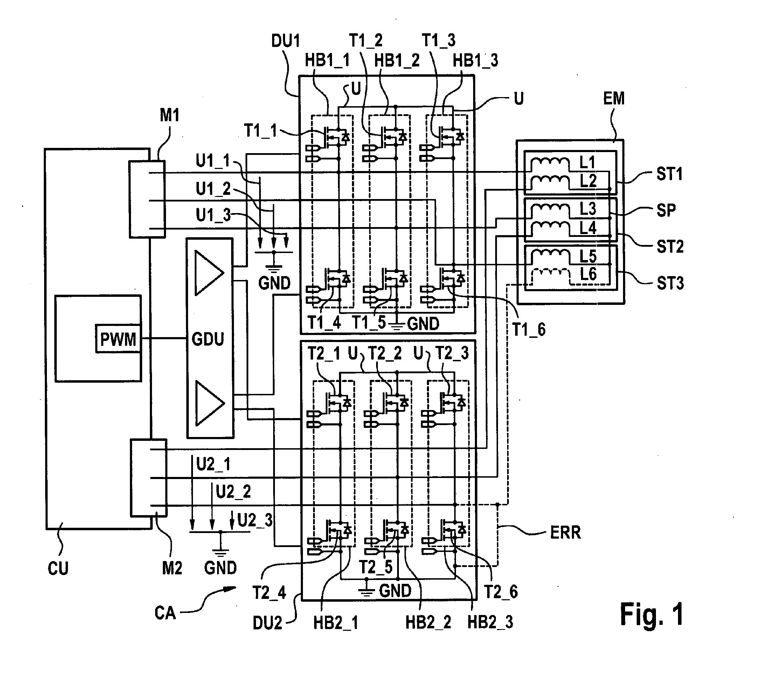

Eine Schaltungsanordnung CA (Fig. 1) für eine elektrische Maschine EM weist eine erste und eine zweite Treiberstufe DU1, DU2 auf, die jeweils eine B6-Brücke zur Ansteuerung der elektrischen Maschine EM umfassen. Die Schaltungsanordnung CA kann beispielsweise einem Lenkungssystem, so z.B. einem Power-Steering System, eines Kraftfahrzeugs zugeordnet sein.

Jede Treiberstufe DU1, DU2 weist jeweils drei Halbbrücken HB1_1-HB1_3, H2_1-H2_3 auf. Jede Halbbrücke HB1_1-HB1_3, H2_1-H2_3 weist wiederum jeweils ein erstes Schaltelement T1_1, T1_2, T1_3 und ein zweites Schaltelement T1_4, T1_5, T1_6 auf, die elektrisch in Reihe geschaltet sind und jeweils einen gemeinsamen Anschluss aufweisen. Die erste Treiberstufe DU1 kann auch als eine erste Auswahl von mehreren Halbbrücken und die zweite Treiberstufe DU2 kann auch als eine zweite Auswahl von mehreren Halbbrücken bezeichnet werden. Jede Halbbrücke ist elektrisch zwischen einem Versorgungspotential U, so z.B. 12 V, und einem Bezugspotenzial GND gekoppelt, das beispielsweise als Masse des Kraftfahrzeugs ausgebildet ist.

Die jeweiligen Schaltelemente T1_1-T1_6, T2_1-T2_6 der Halbbrücken HB1_1-HB1_3, H2_1-H2_3 sind beispielsweise als Leistungstransistoren, so z.B. als Leistungsfeldeffekttransistor, ausgebildet und weisen jeweils eine Freilaufdiode auf, die elektrisch parallel zu Nichtsteueranschlüssen des jeweiligen Schaltelementes gekoppelt ist.

Die elektrische Maschine EM ist beispielsweise als permanenterregte bürstenlose Synchronmaschine ausgebildet, die beispielsweise drei Statorwicklungen ST1, ST2, ST3 umfasst. Jede Statorwicklung ST1, ST2, ST3 umfasst einen ersten Wicklungsstrang L1, L3, L5 und einen zweiten Wicklungsstrang L2, L4, L6. Alle Wicklungsstränge L1-L6 weisen jeweils zwei Anschlüsse auf, wobei alle Wicklungsstränge L1-L6 mit einem ihrer zwei Anschlüsse in einem Sternpunkt SP miteinander elektrisch gekoppelt sind.

Der gemeinsame Anschluss der beiden Schaltelemente der jeweiligen Halbbrücke HB1_1, HB1_2, HB1_3 der ersten Treiberstufe DU1 ist mit dem ersten Wicklungsstrang L1, L3, L5 der jeweiligen zugeordneten Statorwicklung ST1, ST2, ST3 elektrisch koppelbar. Der gemeinsame Anschluss der beiden Schaltelemente der jeweiligen Halbbrücke HB2_1, HB2_2, HB2_3 der zweiten Treiberstufe DU2 ist mit dem zweiten Wicklungsstrang L2, L4, L6 der jeweiligen zugeordneten Statorwicklung ST1, ST2, ST3 elektrisch koppelbar. Dabei ist jede Halbbrücke HB1_1-HB1_3 der ersten Treiberstufe DU1 einer anderen Statorwicklung ST1-St3 und jede Halbbrücke HB2_1-HB2_3 der zweiten Treiberstufe DU2 einer anderen Statorwicklung ST1-St3 zugeordnet.

Ferner weist die Schaltungsanordnung CA eine Treibereinheit GDU auf, die mehrere Eingangsanschlüsse und mehrere Ausgangsanschlüsse aufweist. Jeder Ausgangsanschluss ist einem Steuereingang eines Schaltelementes zugeordnet. In einem fehlerfreien Zustand werden vorzugsweise die ersten Schaltelemente T1_1-T1_3, T2_1-T2_3, die derselben Statorwicklung ST1, ST2, ST3 zugeordnet sind, zeitlich parallel angesteuert. Beispielsweise sind das erste Schaltelement T1_1 der ersten Halbbrücke HB1_1 in der ersten Treiberstufe DU1 und das erste Schaltelement T2_1 der ersten Halbbrücke H2_1 in der zweiten Treiberstufe DU2 der ersten Statorwicklung ST1 zugeordnet und werden somit zeitlich parallel angesteuert. Liegt dagegen beispielsweise ein Fehlerfall vor, können die jeweils einander zugeordneten ersten Schaltelemente auch unterschiedlich angesteuert werden. Entsprechendes gilt für die zweiten Schaltelemente.

Die Treibereinheit GDU ist mittels der Eingangsanschlüsse mit einer Pulsweitenmodulationseinheit PWM einer Steuereinheit CU elektrisch gekoppelt. Die Steuereinheit CU ist ausgebildet, mittels der Pulsweitenmodulationseinheit PWM mehrere vorgegebene pulsweitenmodulierte Steuersignale der Treibereinheit GDU zur Verfügung zu stellen. Abhängig von den vorgegebenen pulsweitenmodulierten Steuersignalen werden mittels der Treibereinheit GDU die Steuersignale für die Schaltelemente bereitgestellt. Durch die Vorgabe der vorgegebenen pulsweitenmodulierten Steuersignale kann beispielsweise ein Drehmoment, eine Drehzahl n und eine Drehrichtung eines Rotors der elektrischen Maschine EM vorgegeben werden. Dadurch kann beispielsweise eine vorgegebene Lenkbewegung eines Fahrers des Kraftfahrzeugs unterstützt werden. Dabei ist die Treibereinheit GDU ausgebildet, die eingangsseitig bereitgestellten pulsweitenmodulierten Steuersignale beispielsweise zu verstärken und/oder Totzeiten hinzuzufügen zur Verhinderung einer niederohmigen Kopplung zwischen dem Versorgungspotential U und dem Bezugspotential GND durch die Schaltelemente einer jeweiligen Halbbrücke.

Die Schaltungsanordnung CA weist ferner Erfassungseinheiten M1, M2 auf, die der Steuereinheit CU zugeordnet sind und die jeweils mit einer der Treiberstufen DU1, DU2 elektrisch gekoppelt sind. Die jeweilige Erfassungseinheit M1, M2 ist ausgebildet, eine Halbbrückenspannung U1_1-U1_3, U2_1-U2-3 jeder ihr zugeordneten Halbbrücke zu erfassen. Die jeweilige Halbbrückenspannung U1_1-U1_3, U2_1-U2-3 repräsentiert eine Spannung zwischen dem gemeinsamen Anschlusses der Schaltelemente jeweils einer zugeordneten Halbbrücke und dem Bezugspotential GND.

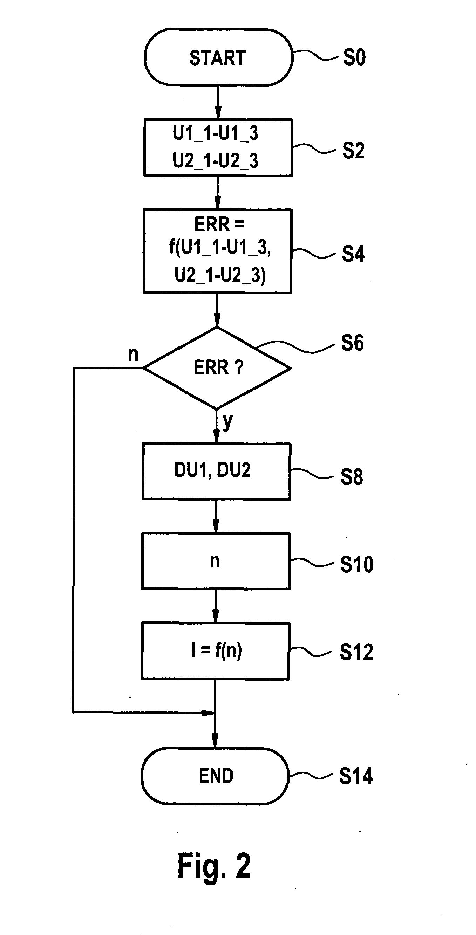

Anhand eines Ablaufdiagramms (Figur 2) wird ein Programm beschrieben, das beispielsweise von der Steuereinheit CU abgearbeitet wird zum Betreiben der Schaltungsanordnung CA. Die Steuereinheit CU kann auch als Vorrichtung zum Betreiben der Schaltungsanordnung CA bezeichnet werden.

In einem Schritt S0 wird das Programm gestartet. In einem Schritt S2 werden mittels der Erfassungseinheiten M1, M2 die Halbbrückenspannungen U1_1-U1_3, U2_1-U2_3 als Kenngrößen der Schaltungsanordnung CA erfasst. In einem-Schritt S4 wird abhängig von den erfassten Halbbrückenspannungen U1_1-U1_3, U2_1-U2_3 ermittelt, ob ein Fehler ERR eines Schaltelementes entweder der ersten Treiberstufe DU1 oder der zweiten Treiberstufe DU2 vorliegt. Dies kann beispielsweise dadurch erfolgen, dass die erfassten Halbbrückenspannungen U1_1-U1_3, U2_1-U2_3 mit vorgegebenen Spannungen verglichen werden und abhängig von zeitlichen Spannungsabweichungen eine Wahrscheinlichkeit ermittelt wird, dass als Quelle des Fehlers ERR ein fehlerhaftes Schaltelement vorliegt. Dabei wird in einem Schritt S6 vorzugsweise auf einen dauerhaften niederohmigen Schaltzustand des fehlerhaften Schaltelementes erkannt.

Der Fehler ERR kann bei einer Lenkbewegung durch den Fahrer abhängig von einer aktuellen Position und Drehzahl n des Rotors zu einem generatorischen Betrieb der elektrischen Maschine EM führen, aus dem ein Bremsdrehmoment resultiert, das einem der Lenkbewegung des Fahrers zugeordneten Lenkdrehmoment entgegenwirkt und gegebenenfalls zu einer Blockierung der Lenkung des Kraftfahrzeugs führen kann. Dabei ist typischerweise das Bremsdrehmoment umso größer, je schneller der Rotor gedreht wird. Dabei kann der Rotor Drehgeschwindigkeiten von beispielsweise 30° pro Sekunde erreichen bei entsprechender Lenkbewegung des Fahrers und mechanischer Kopplung der elektrischen Maschine EM mit einem durch den Fahrer betätigten Lenkrad.

Liegt beispielsweise ein dauerhafter niederohmiger Schaltzustand des Schaltelements T2_3 vor, so kann im generatorischen Betrieb abhängig von der aktuellen Position, Drehzahl n und Drehrichtung der elektrischen Maschine EM eine Spannung induziert werden, so z.B. in der Statorwicklung ST3, die dazu führen kann, dass die Freilaufdiode beispielsweise des Schaltelementes T1 in Durchlassrichtung betrieben wird, so dass ein Stromfluss resultiert, aus dem wiederum das Bremsdrehmoment resultiert, das dem Lenkdrehmoment entgegenwirkt.
In einem Schritt S8 werden vorzugsweise alle übrigen Schaltelemente der Treiberstufe, die das fehlerhafte Schaltelement aufweist, in einen hochohmigen Schaltzustand gesteuert, wodurch die Lenkunterstützung deaktiviert wird. Dies kann beispielsweise durch eine entsprechende Ansteuerung der Treibereinheit GDU mittels der Steuereinheit CU erfolgen.

In einem Schritt S10 wird zumindest eine Betriebsgröße der elektrischen Maschine EM, so z.B. die aktuelle Drehzahl n und/oder die aktuelle Position des Rotors und/oder die Drehrichtung des Rotors der elektrischen Maschine EM, ermittelt. In einem Schritt S12 wird abhängig von der ermittelten zumindest einen Betriebsgröße ein Wert eines Kompensationsstromes I, insbesondere ein Wert einer Amplitude des Kompensationsstromes I, ermittelt. Dazu wird in dem Schritt S12 abhängig von dem ermittelten Wert des Kompensationsstroms I zumindest ein fehlerfreies Schaltelement der Treiberstufe angesteuert, die nicht das fehlerhafte Schaltelement aufweist. Durch die Ansteuerung dieses zumindest einen fehlerfreien Schaltelementes wird der Kompensationsstrom I zumindest einer Statorwicklung der elektrischen Maschine EM derart zugeführt, dass ein Kompensationsdrehmoment resultiert, welches dem Bremsdrehmoment zumindest teilweise entgegenwirkt. Vorzugsweise wird der Kompensationsstrom I derart ermittelt, dass dessen Amplitude gleich groß ist mit einer Amplitude des Stromes, der aus dem generatorischen Betrieb der elektrischen Maschine EM im Fehlerfall resultiert, so dass das resultierende Kompensationsdrehmoment gleich dem Bremsdrehmoment ist. Dies kann beispielsweise im Rahmen eines Feldschwächungsbetriebs der elektrischen Maschine EM erfolgen. In einem Schritt S14 wird das Programm beendet. Alternativ kann es auch in dem Schritt S2 erneut ausgeführt werden.

Durch die Bereitstellung des Kompensationsdrehmomentes bleibt das Kraftfahrzeug auch bei einem vorliegenden Fehler ERR typischerweise lenkbar, auch ohne Lenkunterstützung.

**Bezugszeichenliste**

| | |
|---|---|
| CA | Schaltungsanordnung |
| CU | Steuereinheit |
| DU1, DU2 | Treiberstufe |
| EM | elektrische Maschine |
| ERR | Fehler |
| GDU | Treibereinheit |
| GND | Bezugspotential |
| H1_1-H1_3, H2_1-H2_3 | Halbbrücke |
| I | Kompensationsstrom |
| L1-L6 | Wicklungsstränge |
| M1, M2 | Erfassungseinheit |
| n | Drehzahl |
| PWM | Pulsweitenmodulationseinheit |
| SP | Sternpunkt |
| ST1, ST2, ST3 | Statorwicklung |
| T1_1-T1_6, T2_1-T2_6 6 | Schaltelement |
| U | Versorgungspotential |
| U1_1-U1_3, U2_1-U2_3 | Halbbrückenspannung |

## Patentansprüche

1. Schaltungsanordnung (CA) für eine elektrische Maschine (EM), die mehrere Statorwicklungen (ST1, ST2, ST3) umfasst, wobei jede Statorwicklung (ST1, ST2, ST3) zumindest einen ersten Wicklungsstrang (L1, L3, L5) und einen zweiten Wicklungsstrang (L2, L4, L6) umfasst, wobei die Schaltungsanordnung (CA) zumindest eine vorgegebene erste und eine vorgegebene zweite Auswahl von jeweils mehreren Halbbrücken (HB1_1-HB1_3, H2_1-H2_3) umfasst, wobei jede Halbbrücke ein erstes Schaltelement (T1_1-T1_3, T2_1-T2_3) und ein dazu elektrisch in Reihe gekoppeltes zweites Schaltelement (T1_4-T1_6, T2_4-T2_6) aufweist, wobei
- ein gemeinsamer Anschluss der beiden Schaltelemente (T1_1-T1_4, T1_2-T1_5, T1_3-T1_6) der jeweiligen Halbbrücke (HB1_1, HB1_2, HB1_3) der ersten Auswahl jeweils mit einem Anschluss des ersten Wicklungsstranges (L1, L3, L5) der jeweiligen zugeordneten Statorwicklung (ST1, ST2, ST3) elektrisch koppelbar ist und den Halbbrücken (HB1_1, HB1_2, HB1_3) der ersten Auswahl jeweils unterschiedliche Statorwicklungen (ST1, ST2, ST3) zugeordnet sind,
- ein gemeinsamer Anschluss der beiden Schaltelemente (T2_1-T2_4, T2_2-T2_5, T2_3-T2_6) der jeweiligen Halbbrücke (HB2_1, HB2_2, HB2_3) der zweiten Auswahl jeweils mit einem Anschluss des zweiten Wicklungsstranges (L2, L4, L6) der jeweiligen zugeordneten Statorwicklung (ST1, ST2, ST3) elektrisch koppelbar ist und den Halbbrücken (HB2_1, HB2_2, HB2_3) der zweiten Auswahl jeweils unterschiedliche Statorwicklungen (ST1, ST2, ST3) zugeordnet sind, wobei
- zumindest eine vorgegebene Kenngröße der Schaltungsanordnung (CA) erfasst wird,
- abhängig von der zumindest einen erfassten Kenngröße ein Fehler (ERR) eines Schaltelementes (T1_1-T1_3, T2_1-T2_3) entweder der ersten oder zweiten Auswahl detektiert wird, aus dem zumindest während eines Drehens eines Rotors der elektrischen Maschine (EM) ein Bremsdrehmoment auf den Rotor resultiert,
- abhängig von der Detektierung des Fehlers (ERR) zumindest ein fehlerfreies Schaltelement der jeweils fehlerfreien Auswahl derart angesteuert wird, dass ein vorgegebener Kompensationsstrom (I) dem jeweils zugeordneten Wicklungsstrang (L1-L6) derart zugeführt wird, dass daraus ein zugeordnetes Gegendrehmoment resultiert, das dem Bremsdrehmoment entgegenwirkt.

2. Verfahren nach Anspruch 2, bei dem
- zumindest eine Betriebsgröße der elektrischen Maschine (EM) ermittelt wird,
- abhängig von der zumindest einen ermittelten Betriebsgröße das zumindest eine fehlerfreie Schaltelement angesteuert wird.

3. Verfahren nach Anspruch 3, bei dem als zumindest eine Betriebsgröße der elektrischen Maschine (EM) eine aktuelle Drehzahl (n) und/oder eine aktuelle Winkelposition des Rotors und/oder eine Drehrichtung des Rotors ermittelt werden.

4. Verfahren nach einem der Ansprüche 2 bis 4, bei dem abhängig von der Detektierung des Fehlers (ERR) alle übrigen Schaltelemente der Auswahl, die das fehlerhafte Schaltelement aufweist, in einen hochohmigen Schaltzustand gesteuert werden.

5. Verfahren nach einem der Ansprüche 2 bis 5, bei dem als Fehler (ERR) des Schaltelementes ein dauerhafter niederohmiger Schaltzustand detektiert wird.

6. Verfahren nach einem der Anspruch 2 bis 6, bei dem
- als vorgegebene Kenngrößen der Schaltungsanordnung (CA) Halbbrückenspannungen (U1_1-U1_3, U2_1-U2_3) erfasst werden, wobei eine Halbbrückenspannung (U1_1-U1_3, U2_1-U2_3) jeweils einer Halbbrücke (HB1_1-HB1_3, HB2_1-HB2_3) zugeordnet ist und eine Spannung repräsentiert, die dem gemeinsamen Anschluss der beiden Schaltelemente (T1_1-T1_4, T1_2-T1_5, T1_3-T1_6, T2_1-T2_4, T2_2-T2_5, T2_3-T2_6) der jeweiligen Halbbrücke (HB1_1-HB1_3, HB2_1-HB2_3) zugeordnet ist.

7. Verfahren nach einem der Ansprüche 2 bis 7, bei dem der Kompensationsstrom (I) derart vorgegeben wird, dass das Gegendrehmoment gleich dem Bremsdrehmoment ist.

8. Vorrichtung zum Betreiben einer Schaltungsanordnung (CA) gemäß Anspruch 1, die ausgebildet ist,
- einen Fehler (ERR) eines Schaltelementes (T1_1-T1_3, T2-1-T2_3) entweder der ersten oder zweiten Auswahl zu detektieren, aus dem zumindest während eines Drehens eines Rotors der elektrischen Maschine (EM) ein Bremsdrehmoment auf den Rotor resultiert,
- abhängig von der Detektierung des Fehlers (ERR) zumindest ein fehlerfreies Schaltelement der jeweils fehlerfreien Auswahl derart anzusteuern, dass ein vorgegebener Kompensationsstrom (I) zumindest einem zugeordneten Wicklungsstrang (L1-L6) derart zugeführt wird, dass daraus ein zugeordnetes Gegendrehmoment resultiert, das dem Bremsdrehmoment entgegenwirkt.

## Revendications

1. Circuit (CA) pour machine électrique (EM), le circuit présentant plusieurs bobinages de stator (ST1, ST2, ST3), chaque bobinage de stator (ST1, ST2, ST3) comprenant au moins un premier barreau de bobinage (L1, L3, L5) et un deuxième barreau de bobinage (L2, L4, L6), le circuit (CA) comprenant au moins une première sélection prédéterminée et une deuxième sélection prédéterminée de plusieurs demi-ponts (HB1_1-HB1_3, H2_1-H2_3), chaque demi-pont présentant un premier élément de commutation (T1_1-T1_3, T2_1-T2_3) et un deuxième élément de commutation (T1_4-T1_6, T2_4-T2_6) raccordé en série au premier, une borne de raccordement commune des deux éléments de commutation (T1_1-T1_4, T1_2-T1_5, T1_3-T1_6) de chaque demi-pont (HB1_1, HB1_2, HB1_3) de la première sélection pouvant être raccordée électriquement à une borne de raccordement respective du premier barreau d'enroulement (L1, L3, L5) du bobinage de stator (ST1, ST2, ST3) associé et des bobinages différents de stator (ST1, ST2, ST3) étant associés aux demi-ponts (HB1_1, HB1_2, HB1_3) de la première sélection,
une borne de raccordement commune des deux éléments de commutation (T2_1-T2_4, T2_2-T2_5, T2_3-T2_6) de chaque demi-pont (HB2_1, HB2_2, HB2_3) de la deuxième sélection pouvant être raccordée électriquement à une borne de raccordement du deuxième barreau d'enroulement (L2, L4, L6) du bobinage de stator (ST1, ST2, ST3) raccordé, des bobinages de stator différents (ST1, ST2, ST3) étant associés aux demi-ponts (HB2_1, HB2_2, HB2 3) de la deuxième sélection,
au moins une grandeur caractéristique prédéterminée du circuit (CA) étant saisie,
en fonction de la ou des grandeurs caractéristiques saisies, un défaut (ERR) d'un élément de commutation (T1_1-T1_3, T2_1-T2_3) de la première ou de la deuxième sélection est déterminée et entraîne l'application d'un couple de rotation de freinage sur le rotor au moins pendant un tour du rotor de la machine électrique (EM),
en fonction de la détection du défaut (ERR), au moins un élément de commutation non défectueux de la sélection non défectueuse est commandé de manière à apporter un courant de compensation prédéterminé (I) au barreau d'enroulement (L1-L6) associé de telle sorte qu'il en résulte un couple de rotation opposé associé qui s'oppose au couple de rotation de freinage.

2. Procédé selon la revendication 2, dans lequel au moins une grandeur de fonctionnement de la machine électrique (EM) est déterminée, le ou les éléments de commutation non défectueux étant commandés en fonction de la ou des grandeurs de fonctionnement qui ont été déterminées.

3. Procédé selon la revendication 3, dans lequel la vitesse de rotation effective (n), la position angulaire effective du rotor et/ou le sens de rotation du rotor sont déterminés comme grandeurs de fonctionnement ou grandeurs de fonctionnement de la machine électrique (EM).

4. Procédé selon l'une des revendications 2 à 4, dans lequel tous les autres éléments de commutation de la sélection qui présente l'élément de commutation défectueux sont commandés dans un état de commutation à haute impédance ohmique en fonction de la détection du défaut (ERR).

5. Procédé selon l'une des revendications 2 à 5, dans lequel un état de commutation durablement à basse impédance ohmique est détecté comme défaut (ERR) de l'élément de commutation.

6. Procédé selon l'une des revendications 2 à 6, dans lequel toutes les valeurs caractéristiques prédéterminées du circuit (CA) qui sont déterminées sont des tensions de demi-pont (U1_1-U1_3, U2_1-U2_3), une tension de demi-pont (U1_1-U1_3, U2_1-U2_3) étant associée à un demi-pont (HB1_1-HB1_3, HB2_1-HB2_3) respectif et représentant une tension qui est associée à la borne de raccordement commun des deux éléments de commutation (T1_1-T1_4, T1_2-T1_5, T1_3-T1_6, T2_1-T2_4, T2_2-T2_5, T2_3-T2_6) du demi-pont (HB1-1-HB1_3, HB2_1-HB2_3) concerné.

7. Procédé selon l'une des revendications 2 à 7, dans lequel le courant de compensation (I) est prédéterminé de telle sorte que le couple de rotation opposé soit identique au couple de rotation de freinage.

8. Dispositif de conduite d'un circuit (CA) selon la revendication 1, le dispositif étant configuré pour
détecter un défaut (ERR) d'un élément de commutation (T1_1-T1_3, T2_1-T2_3) de la première ou de la deuxième sélection le défaut entraînant l'application d'un couple de rotation de freinage sur le rotor au moins pendant un tour du rotor de la machine électrique (EM) et pour
commander au moins un élément de commutation non défectueux de la sélection non défectueuse en fonction de la détection du défaut (ERR) de manière à apporter un courant de compensation (I) prédéterminé au moins à un barreau d'enroulement (L1-L6) associé et qu'il en résulte un couple de rotation opposé associé qui s'oppose au couple de rotation de freinage.

## Claims

1. Circuit arrangement (CA) for an electrical machine (EM) which comprises a plurality of stator windings (ST1, ST2, ST3), with each stator winding (ST1, ST2, ST3) comprising at least a first winding phase (L1, L3, L5) and a second winding phase (L2, L4, L6), with the circuit arrangement (CA) comprising at least a prespecified first and a prespecified second selection of in each case a plurality of half-bridges (HB1_1-HB1_3, H2_1-H2_3), with each half-bridge having a first switching element (T1_1-T1_3, T2_1-T2_3) and a second switching element (T1_4-T1_6, T2_4-T2_6) which is coupled to said first switching element electrically in series,
- it being possible for a common connection of the two switching elements (T1_1-T1_4, T1_2-T1_5, T1_3-T1_6) of the respective half-bridge (HB1_1, HB1_2, HB1_3) of the first selection to be electrically coupled in each case to a connection of the first winding phase (L1, L3, L5) of the respective associated stator winding (ST1, ST2, ST3), and with in each case different stator windings (ST1, ST2, ST3) being associated with the half-bridges (HB1_1, HB1_2, HB1_3) of the first selection,
- it being possible for a common connection of the two switching elements (T2_1-T2_4, T2_2-T2_5, T2_3-T2_6) of the respective half-bridge (HB2_1, HB2_2, HB2_3) of the second selection to be electrically coupled in each case to a connection of the second winding phase (L2, L4, L6) of the respective associated stator winding (ST1, ST2, ST3), and with in each case different stator windings (ST1, ST2, ST3) being associated with the half-bridges (HB2_1, HB2_2, HB2_3) of the second selection, with
- at least one prespecified characteristic variable of the circuit arrangement (CA) being recorded,
- an error (ERR) of a switching element (T1_1-T1_3, T2_1-T2_3) either of the first or second selection is detected as a function of the at least one recorded characteristic variable, a braking torque resulting on the rotor from said error at least during a rotation of a rotor of the electrical machine (EM),
- at least one error-free switching element of the respectively error-free selection being driven as a function of the detection of the error (ERR) in such a way that a prespecified compensation current (I) is supplied to the respectively associated winding phase (L1-L6) in such a way that this results in an associated countertorque which counteracts the braking torque.

2. Method according to Claim 2, in which
- at least one operating variable of the electrical machine (EM) is determined,
- the at least one error-free switching element is driven as a function of the at least one determined operating variable.

3. Method according to Claim 3, in which a current rotation speed (n) and/or a current angular position of the rotor and/or a direction of rotation of the rotor are/is determined as at least one operating variable of the electrical machine (EM).

4. Method according to one of Claims 2 to 4, in which all the remaining switching elements of the selection which contains the faulty switching element are adjusted to a high-impedance switching state as a function of the error (ERR) being detected.

5. Method according to one of Claims 2 to 5, in which a permanent low-impedance switching state is detected as the error (ERR) in the switching element.

6. Method according to one of Claims 2 to 6, in which
- half-bridge voltages (U1_1-U1_3, U2_1-U2_3) are recorded as prespecified characteristic variables of the circuit arrangement (CA), with a half-bridge voltage (U1_1-U1_3, U2_1-U2_3) being associated with in each case one half-bridge (HB1_1-HB1_3, HB2_1-HB2_3) and representing a voltage which is associated with the common connection of the two switching elements (T1_1-T1_4, T1_2-T1_5, T1_3-T1_6, T2_1-T2_4, T2_2-T2_5, T2_3-T2_6) of the respective half-bridge (HB1_1-HB1_3, HB2_1-HB2_3).

7. Method according to one of Claims 2 to 7, in which the compensation current (I) is prespecified in such a way that the countertorque is equal to the braking torque.

8. Device for operating a circuit arrangement (CA) according to Claim 1, which device is designed
- to detect an error (ERR) in a switching element (T1_1-T1_3, T2_1-T2_3) either of the first or second selection, a braking torque resulting on the rotor from said error at least during a rotation of a rotor of the electrical machine (EM),
- to drive at least one error-free switching element of the respectively error-free selection as a function of the detection of the error (ERR) in such a way that a prespecified compensation current (I) is supplied at least to an associated winding phase (L1-L6) in such a way that this results in an associated countertorque which counteracts the braking torque.
